Europäisches Patentamt

**European Patent Office**

Office européen des brevets

(11) Numéro de publication: **0 152 328**
**B1**

(12) **FASCICULE DE BREVET EUROPÉEN**

(45) Date de publication du fascicule du brevet:
12.07.89

(21) Numéro de dépôt: 85400138.5

(22) Date de dépôt: 28.01.85

(51) Int. Cl.⁴: **G 11 B 5/48,** G 11 B 5/60,
G 11 B 5/31, G 11 B 5/17

(54) Dispositif d'écriture et de lecture sur un support magnétique, et son procédé de fabrication.

(30) Priorité: 03.02.84 FR 8401881

(43) Date de publication de la demande:
21.08.85 Bulletin 85/34

(45) Mention de la délivrance du brevet:
12.07.89 Bulletin 89/28

(84) Etats contractants désignés:
BE CH DE FR GB IT LI NL

(73) Titulaire: **COMMISSARIAT A L'ENERGIE
ATOMIQUE, 31/33, rue de la Fédération, F-75015
Paris (FR)**

(72) Inventeur: **Lazzari, Jean- Pierre, 45, Chemin de
Malanot, F-38700 Corenc (FR)**

(74) Mandataire: **Mongrédien, André, c/o BREVATOME
25, rue de Ponthieu, F-75008 Paris (FR)**

(56) Documents cité:
EP-A-0 032 230
EP-A-0 080 373
JP-A-57 098 118
US-A-2 961 494
US-A-3 657 806

IBM TECHNICAL DISCLOSURE BULLETIN, vol. 21,
no. 12, mai 1979, page 5002, New York, US; K.E.
PETERSEN: "Thin film magnetic heads"
PATENTS ABSTRACTS OF JAPAN, vol. 1, no. 103, 13
septembre 1977, page 3310E77; & JP - A - 52 36016
(HITACHI SEISAKUSHO K.K.) 19-03-1977
PATENTS ABSTRACTS OF JAPAN, vol. 1, no. 119, 11
octobre 1977, page 4772E77; & JP - A - 52 50711
(HITACHI SEISAKUSHO K.K.) 23-04-1977
IBM TECHNICAL DISCLOSURE BULLETIN, vol. 25,
no. 7A, décembre 1982, page 3173, New York, US; G.
KAUS et al.: "Sliders for magnetic heads of

(56) Documents cité: (suite)
surface-hardened silicon with integrated
electronic components"
PATENTS ABSTRACTS OF JAPAN, vol. 7, no. 224 (P-
227) 1369 , 5 octobre 1983; & JP - A - 58 114 328
(FUJITSU K.K.) 07-07-1983
IBM TECHNICAL DISCLOSURE BULLETIN, vol. 15,
no. 7, décembre 1972, pages 2183,2184, New York,
US; W.A. WARWICK: "Multilayer ceramic slider
for thin-film heads"

## Description

La présente invention a pour objet un dispositif d'écriture et de lecture sur un support magnétique et son procédé de fabrication. Elle trouve une application dans la réalisation de mémoires à disques magnétiques rigides utilisés dans les ordinateurs.

Les dispositifs d'écriture et de lecture doivent être placés très près de la surface magnétique constituant le support d'informations. Lorsqu'il s'agit d'un support rigide comme un disque magnétique par exemple, le contact du dispositif avec le disque risque de provoquer des rayures et des défauts de surface. Pour réduire ce risque, les têtes magnétiques de lecture et d'écriture sont fixées sur un support particulier appelé patin, dont la surface présente par exemple la forme d'un catamaran. Cette forme permet au patin de voler littéralement au-dessus de la surface du disque, le patin étant porté par le film d'air qui est entraîné par la rotation du disque. La hauteur de vol est en général inférieure au micron.

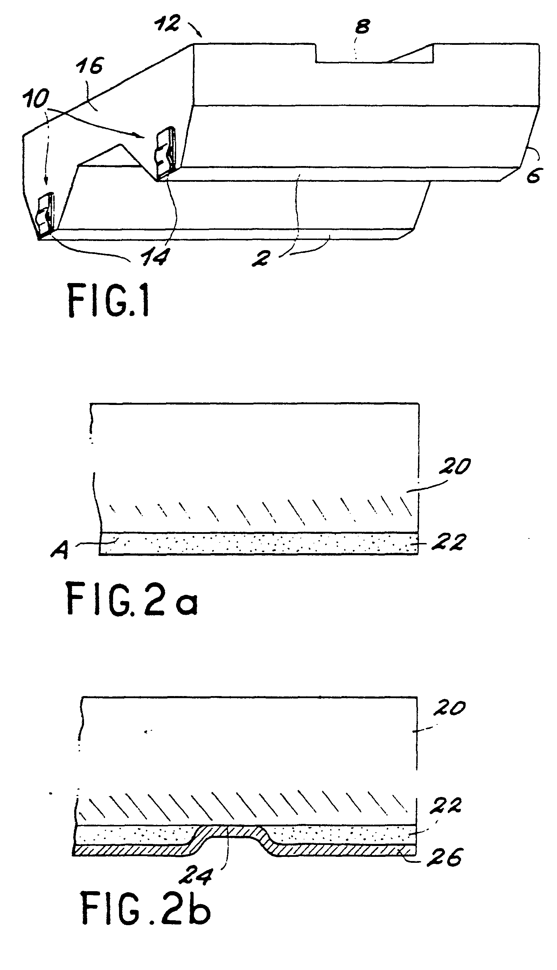

Sur la figure 1 est représenté, en perspective, un tel dispositif selon l'art antérieur. Il comprend un patin 12 dont la surface de vol 2 est placée en regard du disque. En cours de fonctionnement, une poussée s'exerce sur ce patin, qui peut être compensée par une charge (non représentée) et localisée dans la fente supérieure 8. La face d'attaque 6 du catamaran présente une forme en chanfrein.

Le dispositif comprend deux têtes d'écriture et de lecture 10 présentant un entrefer 14. Ces têtes sont situées à l'opposé du chanfrein 6 et sur une face latérale 16. Cette disposition permet aux entrefers 14 d'être au point le plus bas pendant le vol du patin, car le plan de celui-ci se trouve légèrement incliné par rapport à celui du disque, durant son vol.

Les têtes d'écriture-lecture 10, placées sur la face latérale 16 du patin, possèdent une structure et une position que l'on peut qualifier de verticale (ou de transversale, ou de perpendiculaire), en ce sens qu'elles comprennent deux pièces polaires sensiblement perpendiculaires au support d'enregistrement et séparées par un entrefer qui affleure à la surface du plan de vol. Chaque tête comprend en outre un bobinage d'excitation et de lecture dont le plan est lui aussi perpendiculaire au support d'enregistrement. L'ensemble est donc d'orientation perpendiculaire à la surface de vol 2.

Pour réaliser les profils en catamaran tels que celui de la figure 1, on profite d'une propriété que présentent certains matériaux cristallins comme le silicium, selon laquelle une gravure chimique d'une face cristalline d'orientation 100 fait apparaître des chanfreins orientés selon les plans cristallographiques 111. Cette technique connue, appelée encore gravure réticulaire, fait apparaître des parois inclinées de 55° par rapport au plan 100.

La technique des patins en forme de catamaran avec têtes verticales est décrite notamment dans l'abrégé de brevet japonais paru dans Patents Abstracts of Japan, vol. 1, n° 103, du 13 septembre 1977, page 3310 E 77, correspondant à la demande de brevet japonais JP-A-5 236 016 du 19 mars 1977 pour " Manufacturing Method for Floating Magnetic Head".

Quant au procédé de gravure réticulaire, pour la réalisation d'un patin de vol, il est décrit notamment dans l'abrégé de brevet japonais paru dans Patent Abstracts of Japan, vol. 1, n° 119 du 11 octobre 1977, page 4772 E 77, correspondant à la demande de brevet japonais JP-A-5 250 711 du 23 avril 1977 pour "Process for Production of Slider".

Ces dispositifs à têtes perpendiculaires présentent en fait un inconvénient majeur. Pour réaliser un tel dispositif, on part d'une tranche épaisse de silicium sur une face duquel on dépose des têtes d'écriture et de lecture (ce qui correspond à la face 16). Puis on découpe cette tranche dans une direction perpendiculaire à la face contenant les têtes. On constitue ainsi des substrats que l'on soumet à une gravure réticulaire sur une face perpendiculaire à la face contenant la tête (ce qui correspond à la face 2).

Un tel procédé nécessite donc une tranche épaisse de silicium (4 à 5 mm), ce qui est coûteux. Par ailleurs, il faut travailler selon deux faces perpendiculaires (les faces 16 et 2), ce qui nécessite un équipement et des techniques complexes. Enfin, les connexions électriques avec le bobinage de la tête doivent être établies sur la tranche du patin (face 16) puis ramenées sur la face supérieure, ce qui est complexe.

On connaît aussi, par le document JP-A-5 798 118, une tête magnétique constituée par une structure horizontale rapportée sous un patin de vol. Mais une telle tête présente des inconvénients: elle est constituée de pièces rapportées et non intégrées et les connexions électriques sortent de chaque côté de la tête.

La présente invention a pour but de remédier à ces inconvénients. A cette fin, elle préconise une structure différente du dispositif, qui autorise l'utilisation de plaquettes de silicium standard, telles qu'on les trouve dans la technique de réalisation des circuits intégrés (c'est-à-dire très minces). Par ailleurs, l'invention fait appel à un traitement qui ne concerne qu'un type de face de la plaquette (en pratique une face et la face en regard). La réalisation du dispositif de l'invention est donc aisée et le coût considérablement abaissé. Par ailleurs, les connexions électriques sortent sur la face opposée de la plaquette.

Ce but est atteint par l'invention grâce à une disposition originale de la tête d'écriture et de lecture qui ne se situe plus sur une face latérale du patin, mais sur la surface de vol elle-même. Cette tête doit avoir, en conséquence, une structure différente, la disposition verticale ne convenant plus. La tête est alors de type horizontal. Par ailleurs, les connexions électriques avec le bobinage de la tête sont effectuées à travers la plaquette de silicium, par des ouvertures pratiquées à partir de la face opposée à la surface du vol.

De façon précise, la présente invention a pour objet un dispositif pour l'écriture et la lecture sur un support à enregistrement magnétique, ce dispositif comprenant au moins une tête magnétique d'écriture et de lecture réalisée sur un patin, ce patin présentant un profil de type catamaran, gravé dans une face cristallographique 100 d'une plaquette monocristalline de silicium, ce profil comprenant deux reliefs ayant une face supérieure plane et deux flancs inclinés selon des plans cristallographiques 111, ce dispositif étant caractérisé par le fait que les têtes magnétiques d'écriture et de lecture sont disposées sur les faces supérieures des reliefs à une extrémité de ceux-ci et sont du type à structure horizontale, chaque tête ayant un bobinage dans un plan parallèle à cette face et présentant au moins une pièce polaire d'écriture et de lecture affleurant sur la face supérieure des reliefs, ce dispositif comprenant en outre, des trous traversant de part en part la plaquette de silicium et étant recouverts d'une couche métallique qui est en contact avec des conducteurs reliés aux bobinages des têtes d'écriture et de lecture.

Par l'expression "au moins une pièce polaire magnétique" on entend couvrir les têtes à enregistrement perpendiculaire qui possèdent un pôle principal et les têtes à enregistrement horizontal qui possèdent deux pièces polaires séparées par un entrefer amagnétique.

L'invention a également pour objet un procédé de réalisation d'un dispositif tel qu'il vient d'être défini. Ce procédé est caractérisé en ce qu'il comprend les opérations suivantes:

- sur une plaquette de silicium monocristallin ayant une première et une deuxième faces cristallographiques (100), on dépose sur la première face des têtes d'écriture et de lecture à structure horizontale,
- on recouvre ces têtes par une couche de masquage,
- on effectue une gravure réticulaire de cette première face du silicium pour faire apparaître des reliefs à flancs obliques orientés selon les plans cristallographiques (111) de la plaquette,
- sur la seconde face de la plaquette on creuse des trous traversant la plaquette de silicium et débouchant sur la première face,
- on dépose une couche de métal dans ces trous pour établir une connexion entre les deux faces de la plaquette, cette couche étant raccordée par des conducteurs aux bobinages des têtes situées sur l'autre face,
- on découpe la plaquette de silicium pour séparer des paires de reliefs, chaque paire formant un patin de type catamaran, avec deux têtes d'écriture et de lecture.

De toute façon, les caractéristiques et avantages de l'invention apparaîtront mieux après la description qui suit, donnée à titre explicatif et nullement limitatif. Cette description se réfère à des dessins annexés, sur lesquels:

- la figure 1, déjà décrite, représente un dispositif selon l'art antérieur,
- les figures 2a et 2b montrent la préparation d'un substrat de silicium au niveau d'une future connexion avec les bobinages,
- les figures 3 à 6 montrent diverses étapes de fabrication d'une tête horizontale,
- la figure 7 montre une plaquette de silicium avec des têtes d'écriture et de lecture,
- la figure 8 montre ce même substrat après gravure réticulaire,
- la figure 9 montre un détail illustrant une connexion électrique par la face supérieure du substrat, à travers une ouverture pyramidale,
- la figure 10 montre un trou pyramidal de centrage,
- la figure 11 montre une vue générale du dispositif de l'invention finalement obtenu.

La figure 2a montre une plaquette de silicium 20, telle qu'on en utilise dans la technique des circuits intégrés. Sur une première face A de cette plaquette, on fait croître une couche de silice 22, par oxydation. On dégage dans cet oxyde des zones 24 (figure 2b) puis on dépose des conducteurs métalliques 26, qui constitueront des contacts de sortie pour les bobinages des têtes.

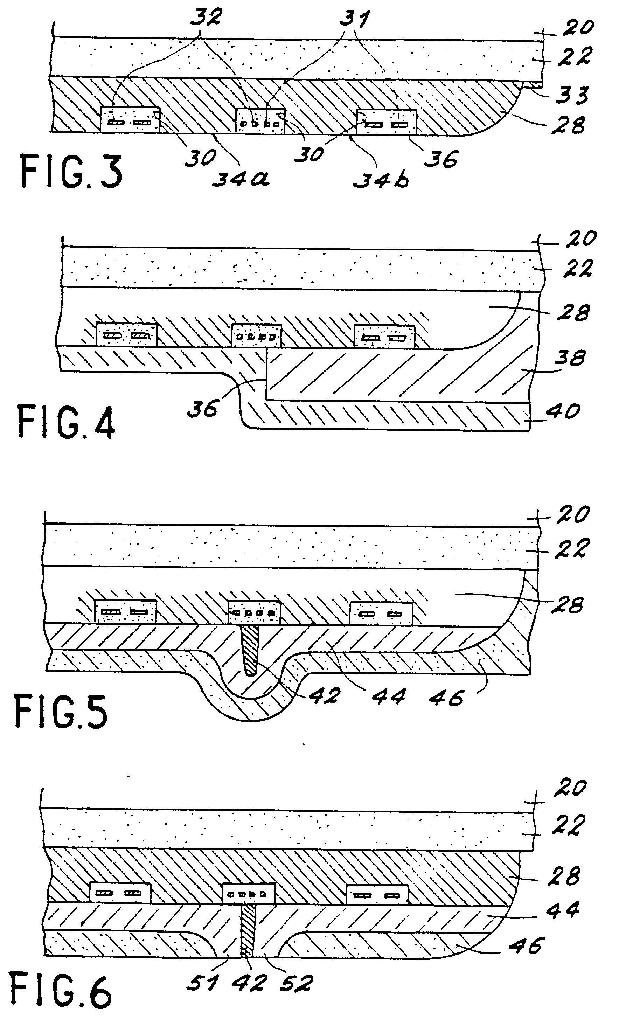

Sur cette même face A de la plaquette de silicium, on réalise ensuite des têtes d'écriture et de lecture à structure horizontale. Les principales étapes d'un procédé possible sont illustrées sur les figures 3 à 7. Ce procédé se réfère à une tête dite à enregistrement horizontal, cette tête comprenant deux pièces polaires séparées par une couche amagnétique. Mais naturellement, on pourrait réaliser une tête à enregistrement perpendiculaire, qui comprend un seul pôle au centre du bobinage, les lignes de champ se refermant par les bords latéraux de la tête.

La figure 3 montre d'abord la plaquette de silicium 20, avec sa couche de silice 22, une couche magnétique 28 ayant été déposée sur l'ensemble. Dans cette dernière couche, on grave une tranchée 30 en forme de huit qui dégage deux pièces polaires 34a et 34b. Dans la tranchée, on réalise un double bobinage spiralé 31 et 32 qui entoure deux pièces polaires 34a et 34b. La tranchée 30 est ensuite remplie d'isolant 36. Les connexions de sortie du bobinage sont formées par des conducteurs 33 qui vont rejoindre les contacts 26 déjà formés (figure 2b).

Sur l'ensemble est déposée ensuite une couche de résine 38 qui est gravée pour constituer une marche 36 (figure 4). Cette marche présente un flanc 36 situé entre les pièces polaires. Une couche d'un matériau amagnétique 40 est ensuite déposée sur l'ensemble.

Cette couche amagnétique est enlevée sauf sur le flanc 36, ce qui laisse subsister une paroi verticale 42 (figure 5). Sont déposées ensuite une nouvelle couche magnétique 44, identique à la couche 28 et une couche de protection 46. Ces deux couches forment un bossage sur la paroi 42.

Cette structure est ensuite sectionnée dans la couche 46 pour faire apparaître deux pièces polaires d'écriture et de lecture 51 et 52 séparées par la paroi amagnétique 42. La tête horizontale est alors constituée.

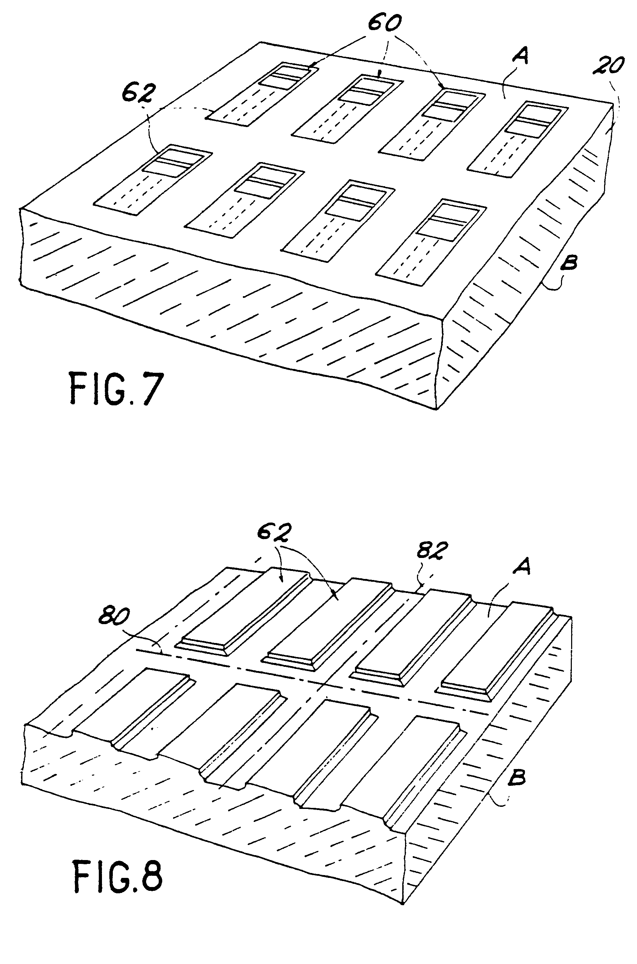

Comme le montre la figure 7, (qui représente la plaquette de silicium retournée par rapport aux figures 3 à 6), on forme en réalité une pluralité de telles têtes 60 sur une même plaquette 20. On dépose ensuite, sur chaqune de ces têtes, une couche 62 de résine ou d'autre matériau servant de masque, $SiO_2$ par exemple, que l'on grave par photolithographie. Puis on procède à une gravure réticulaire de la face A à l'aide d'une solution chimique basique. Cette gravure fait naître des flancs inclinés.

Le résultat obtenu est illustré sur la figure 8. Comme le plan sur lequel sont déposées les têtes est un plan cristallographique 100, la gravure fait apparaître des plans cristallographiques 111 qui constituent les flancs des reliefs, ainsi que des chanfreins à chaque extrémité.

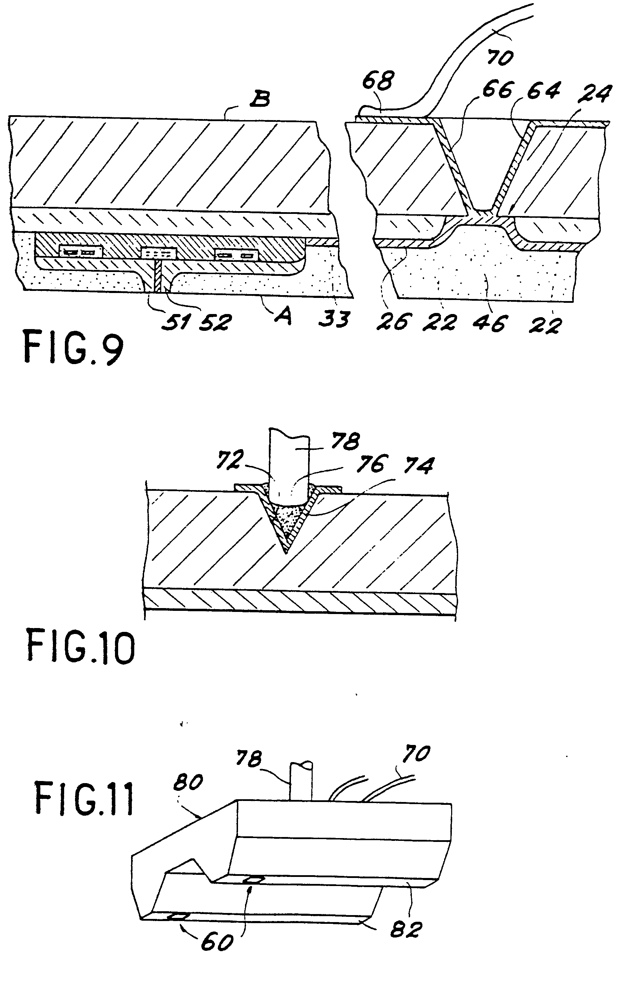

Sur la seconde face B de la plaquette 20, on réalise ensuite des trous pyramidaux selon la forme illustrée sur la figure 9. Toujours par gravure réticulaire, on forme un trou pyramidal 64 dont les parois sont des plans cristallographiques 111 (à 55° par rapport à la surface B). Ce trou traverse la plaquette de part et d'autre et atteint la couche métallique 26 préalablement déposée dans l'ouverture 24 de la couche de silice 22 (cf. figure 2b). Les parois de ce trou sont ensuite métallisées par dépôt sous vide d'une couche de métal 66. Cette connexion peut être par exemple une couche de cuivre déposée sur une couche d'accrochage en Cr cette couche recouvre les parois du trou ainsi que le fond et déborde sur la face supérieure B de la plaquette.

On a ainsi réalisé une connexion électrique entre les deux faces A et B de la plaquette de silicium. Une prise de contact 68 pourra alors être effectuée aisement avec un fil de connexion 70.

La figure 10 illustre une dernière opération qui consiste à creuser, dans la face B, qui ne contient pas les têtes, un trou pyramidal 72. Ce trou est borgne. Les parois de ce trou sont ensuite revêtues d'une couche métallique 74, qui va permettre, par soudure 76 ou collage, la fixation d'un pivot de maintien 78. Sur ce pivot, on exercera une poussée destinée à équilibrer la portée qui se manifeste pendant le vol du patin.

Revenant à la figure 8, une fois les têtes déposées et les gravures réticulaires achevées, la couche de masquage 62 est enlevée et les divers patins sont séparés par découpe selon des chemins de découpe 80 et 82. Chaque patin peut alors être monté dans son équipement définitif avec ses connexions 70 (figure 9) et son pivot de maintien 78 (figure 10).

La figure 11 montre le dispositif finalement obtenu avec son patin 80 en forme de catamaran, ses deux têtes 60, sur la surface de vol 82, les connexions 70 et le pivot 78 sur la face opposée.

## Revendications

1. Dispositif pour l'écriture et la lecture sur un support à enregistrement magnétique, ce dispositif comprenant au moins une tête magnétique d'écriture et de lecture (60) réalisée sur un patin, ce patin présentant un profil de type catamaran gravé dans une face cristallographique (100) d'une plaquette de silicium monocristallin (20), ce profil comprenant deux reliefs ayant une face supérieure plane constituant une surface de vol et deux flancs inclinés selon des plans cristallographiques (111), ce dispositif étant caractérisé par le fait que les têtes magnétiques d'écriture et de lecture (60) sont disposées sur les faces supérieures des reliefs à une extrémité de ceux-ci et sont du type à structure horizontale, chaque tête ayant un bobinage (30, 31) dans un plan parallèle à cette face et présentant au moins une pièce polaire d'écriture et de lecture affleurant sur la face supérieure des reliefs, ce dispositif comprenant en outre des trous (64) traversant de part en part la plaquette de silicium (20), les parois de ces trous étant recouvertes d'une couche métallique (66) qui est en contact avec des conducteurs (26) reliés aux bobinages des têtes d'écriture et de lecture.

2. Dispositif selon la revendication 1, caractérisé par le fait que les trous (64) sont pyramidaux et ont leur parois inclinées selon des plans cristallographiques de silicium (111).

3. Dispositif selon la revendication 1, caractérisé par le fait qu'il comprend en outre, sur la seconde face (B) de la plaquette de silicium (20), un trou pyramidal borgne (72) aux parois inclinées selon des plans cristallographiques (111), un pivot de maintien (78) étant fixé à l'intérieur de ce trou.

4. Dispositif selon la revendication 1, caractérisé en ce que la tête d'écriture et de lecture comprend deux pièces polaires (51, 52) séparées par une paroi amagnétique (42).

5. Procédé de réalisation d'un dispositif selon la revendication 1, caractérisé en ce qu'il comprend les opérations suivantes:

- sur une plaquette de silicium (20) monocristallin ayant une première et une deuxième faces d'orientation cristalline (100), on dépose sur la première face (A) des têtes d'écriture et de lecture (60) à structure horizontale,
- on recouvre ces têtes par une couche de masquage (62),
- on effectue une gravure réticulaire de cette première face (A) pour faire apparaître des reliefs à flancs obliques orientés selon les plans cristallographiques (111) de la plaquette,
- sur la seconde face de la plaquette (B), on creuse des trous (64) traversant la plaquette de silicium et débouchant sur la première face (A),
- on dépose une couche métallique (66) dans ces trous pour établir une connexion électrique entre les deux faces (A, B) de la plaquette, cette couche métallique étant raccordée à des conducteurs reliés aux bobinages des têtes situées sur l'autre face,
- on découpe la plaquette de silicium pour séparer des paires de reliefs, chaque paire formant un patin (80) de type catamaran, avec deux têtes d'écriture et de lecture (60) horizontales affleurant à la surface de vol (82) du patin.

6. Procédé selon la revendication 5, caratérisé par le fait qu'on creuse lesdites trous (64) par gravure réticulaire, ces trous étant pyramidaux et ayant des parois orientées selon les plans cristallographiques (111) du silicium.


**Patentansprüche**

1. Vorrichtung zum Schreiben auf einen und zum Lesen von einem magnetischen Träger, enthaltend wenigstens einen magnetischen Schreib- und Lesekopf (60), der auf einer Fußplatte ausgebildet ist, welche Fußplatte das Profil eines Katamarans aufweist, das in eine kristallografische Fläche (10) einer monokristallinen Siliciumplatte (20) geätzt ist, welches Profil zwei Erhöhungen aufweist, die eine plane Oberfläche, die eine Flugfläche bildet, und zwei in den kristallografischen Ebenen (111) geneigte Flanken haben, dadurch gekennzeichnet, daß die magnetischen Schreib- und Leseköpfe (60) auf den Oberflächen der Erhöhungen an einem Ende derselben angeordnet sind und vom Typ mit horizontaler Struktur sind, daß jeder Kopf eine Wicklung (30, 31) in einer zu dieser Fläche parallelen Ebene aufweist und wenigstens ein Schreib- und Lesepolteil aufweist, das bündig mit der Oberfläche der Erhöhungen ist, wobei die Vorrichtung weiterhin Löcher (64) aufweist, die die Siliciumplatte (20) vollkommen durchdringen, wobei die Wände dieser Löcher von einer Metallschicht (66) bedeckt sind, die mit Leitern (26) in Berührung ist, die mit den Wicklungen der Schreib- und Leseköpfe verbunden sind.

2. Vorrichtung nach Anspruch 1, dadurch gekennzeichnet, daß die Löcher (64) pyramidenförmig sind und mit ihren Wänden in den kristallografischen Ebenen (111) des Siliciums geneigt sind.

3. Vorrichtung nach Anspruch 1, dadurch gekennzeichnet, daß sie darüber hinaus auf der zweiten Seite (6) der Siliciumplatte (20) ein pyramidenförmiges blindes Loch (72) mit in den kristallografischen Ebenen (111) geneigten Wänden aufweist, wobei im Innern dieses Lochs ein Haltezapfen (78) befestigt ist.

4. Vorrichtung nach Anspruch 1, dadurch gekennzeichnet, daß der Schreib- und Lesekopf zwei Polstücke (51, 52) enthält, die von einer amagnetischen Wand voneinander getrennt sind.

5. Verfahren zum Herstellen einer Vorrichtung nach Anspruch 1, dadurch gekennzeichnet, daß es die folgenden Schritte umfaßt:
auf einer Platte aus monokristallinem Silicium (20), die eine erste und eine zweite Kristallorientierungsfläche (100) aufweist, werden auf der ersten Fläche (A) Schreib- und Leseköpfe (60) mit horizontaler Struktur ausgebildet,
diese Köpfe werden von einer Maskierungsschicht (62) bedeckt,
die ersten Fläche (A) wird einer zellenartigen Ätzung unterworfen, um Erhöhungen mit geneigten Flanken auftreten zu lassen, die in den kristallografischen Ebenen (111) der Platte geneigt sind,
auf der zweiten Fläche der Platte (B) werden Löcher (64) ausgebildet, die die Siliciumplatte durchqueren und auf der ersten Fläche (A) münden,
in den Löchern wird eine Metallschicht (66) aufgebracht, um eine elektrische Verbindung zwischen den zwei Flächen (A, B) der Platte herzustellen, wobei diese Metallschicht mit Leitern verbunden wird, die mit den Wicklungen der auf der anderen Fläche gelegenen Köpfe verbunden sind,
die Siliciumplatte wird zerschnitten, um die Erhöhungspaare zu trennen, wobei jedes Paar eine katamaranförmige Fußplatte (80) mit zwei horizontalen Schreib- und Leseköpfen (60) bildet, die in die Flugfläche (82) der Fußplatte bündig eingelassen sind.

6. Verfahren nach Anspruch 5, dadurch gekennzeichnet, daß man die genannten Löcher (64) durch zellenweise Ätzung ausbildet, wobei diese Löcher pyramidenförmig sind und Wände aufweisen, die in den kristallografischen Ebenen (111) des Silciums ausgerichtet sind.


**Claims**

1. Device for reading and writing on a magnetic recording support comprising at least one magnetic read-write head (60) produced on a support, which has a catamaran-type profile, etched in a 100 crystal face of a monocrystalline silicon wafer (20), said profile having two reliefs with an upper planar face and two sides inclined in accordance with 111 crystal planes, characterized in that the magnetic read and write heads (60) are arranged on the upper faces of the reliefs at one end thereof, each head having a coil (30, 31) in a plane parallel to said face and having at least one read and write pole piece flush with the upper face of said reliefs, the device also comprising holes (64) traversing the silicon wafer (20), the walls of these holes being covered with a metal coating (66), which is in contact with conductors (26) connected to the coils of the read and write heads.

2. Device according to claim 1, characterized in that the holes (64) are pyramidal and have their walls inclined according to 111 silicon crystal planes.

3. Device according to claim 1, characterized in that it also comprises, on the second face B of the silicon wafer (20), a blind pyramidal hole (72) with walls inclined according to 111 crystal planes, a holding pivot (78) being fixed within said hole.

4. Device according to claim 1, characterized in that the read and write head comprises two pole pieces (51, 52) separated by an amagnetic wall (42).

5. Process for producing a device according to claim 1, characterized in that it comprises the following operations:

on a monocrystalline silicon wafer (20) having a first and a second 100 crystal orientation faces, on the first face A are deposited read and write heads (60) having a horizontal structure,

these heads are covered by a masking layer (62),

reticular etching takes place of said first face A in order to bring about the appearance of reliefs having oblique sides oriented according to the 111 crystal planes of the wafer,

on the secocd face of the wafer B are formed holes (64) traversing the silicon wafer and issuing onto the first face A,

a metallic coating (66) is deposited in these holes to establish an electrical section between the two faces A, B of the wafer, said metallic coating being connected to conductors connected to the coils of the heads on the other face,

the silicon wafer is cut to separate pairs of reliefs, each pair forming a catamaran-type support (80), with two horizontal read and write heads (60) flush with the displacement surface (82) of the support.

6. Process according to claim 5, characterized in that said holes (64) are made by reticular etching, the holes being pyramidal and having walls oriented in accordance with the 111 crystal planes of the silicon.

FIG.1

FIG.2a

FIG.2b

FIG. 3

FIG.4

FIG.5

FIG.6

FIG.7

FIG.8

FIG.9

FIG.10

FIG.11